(19) Europäisches Patentamt
European Patent Office
Office européen des brevets

(11) EP 1 988 494 A1

(12) **EUROPEAN PATENT APPLICATION**

(43) Date of publication:
**05.11.2008 Bulletin 2008/45**

(51) Int Cl.:
***G06Q 10/00*** (2006.01)

(21) Application number: **07107240.9**

(22) Date of filing: **30.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Honeywell International Inc.**
**Morristown NJ 07960 (US)**

(72) Inventor: **Coward, Brian A.**
**Southampton SO16 OTL (GB)**

(74) Representative: **Haley, Stephen**
**Gill Jennings & Every LLP**
**Broadgate House**
**7 Eldon Street**
**London EC2M 7LH (GB)**

(54) **System and method for coordination and optimization of liquefied natural gas (LNG) processes**

(57) A method includes controlling a first process using a first process control system. The method also includes controlling a second process using a second process control system. The method further includes controlling the first and second process control systems together. In addition, the method includes optimizing at least one process objective using both the first and second process control systems. The first process can be a natural gas liquids production process, and the second process can be a liquefied natural gas production process. The process objective could include at least one of: profit, natural gas liquids quantity, natural gas liquids quality, liquefied natural gas quantity, and liquefied natural gas quality.

FIGURE 1

EP 1 988 494 A1

**Description**

This disclosure relates generally to process control systems and more particularly to a system and method for coordination and optimization of liquefied natural gas (LNG) processes.

In the upstream production of hydrocarbons, certain reservoirs typically produce oil, while others typically produce gas and condensed natural gas liquids (NGL). The price of NGL is often close to the price of crude oil, making it a high value product. Also, the gas that is associated with the NGL is typically rich in ethane and methane and is therefore useful as a source of fuel. However, the gas is typically difficult to transport by pipeline and is typically produced in locations remote from the main areas of demand.

By liquefying the gas at low temperatures, the volume of the gas is reduced (such as by a factor of 600). This process allows tankers to transport liquefied natural gas (LNG) by sea more economically than by pipeline. The production of LNG is a growing industry, with more production plants being built worldwide to cater to the increasing demand from countries such as the United States, the United Kingdom, and Japan. The LNG process is normally located as close as possible to offshore production facilities due to the quantity of gas and entrained liquids involved. The production of LNG from a single site could exceed ten million tons per year.

The produced LNG is typically sold on a "heating value" basis, meaning there is a value in U.S. dollars (typically per million British Thermal Units or BTUs) that the LNG is sold against. An LNG production plant typically runs to a quality on either a Lower Heating Value (LHV) or a Higher Heating Value (HHV) for the LNG being produced. The heating value is often affected by the quality of the feedstock, which is fed to the process, and the operation of the processing itself. The processing of the feedstock in an LNG train can be controlled using advanced process control techniques.

The feedstock to the LNG process is often impacted by upstream operations. The normal method of running an upstream production process is to not consider the impact of the gas quality on downstream processing sites, but rather to look at the local production and to try and maximize local profitability. This choice is typically driven by how much NGL is produced from various wells. This often makes the higher NGL-yielding wells the preferential production wells, even though the gas quality may have a detrimental effect on the LNG quality.

This disclosure provides a system and method for coordination and optimization of liquefied natural gas (LNG) processes.

In a first embodiment, a method includes controlling a first process using a first process control system and controlling a second process using a second process control system. The method also includes controlling the first and second process control systems together and optimizing at least one process objective using both the first and second process control systems. In particular embodiments, the first process is a natural gas liquids production process, and the second process is a liquefied natural gas production process.

In a second embodiment, an apparatus includes at least one processor capable of simultaneously controlling a first process control system that controls a first process and a second process control system that controls a second process. The processor is also capable of optimizing at least one process objective using both the first and second process control systems.

In a third embodiment, a computer program is embodied on a computer readable medium and is operable to be executed by a processor. The computer program includes computer readable program code for simultaneously controlling a first process control system that controls a first process and a second process control system that controls a second process. The computer program also includes computer readable program code for optimizing at least one process objective using both the first and second process control systems, where the first process is a natural gas liquids production process and the second process is a liquefied natural gas production process.

Other technical features may be readily apparent to one skilled in the art from the following figures, descriptions, and claims.

IN THE DRAWINGS

For a more complete understanding of this disclosure, reference is now made to the following description, taken in conjunction with the accompanying drawings, in which:

FIGURE 1 illustrates an example process control system according to one embodiment of this disclosure;

FIGURE 2 illustrates an example process control system for a natural gas liquids (NGL) production processing operation according to one embodiment of this disclosure;

FIGURE 3 illustrates an example process control system for a liquefied natural gas (LNG) production processing operation according to one embodiment of this disclosure;

FIGURE 4 illustrates an example process control system for optimization of NGL production processing and LNG production processing operations according to one embodiment of this disclosure; and

FIGURE 5 illustrates an example method for coordination and optimization of LNG processes according to one embodiment of this disclosure.

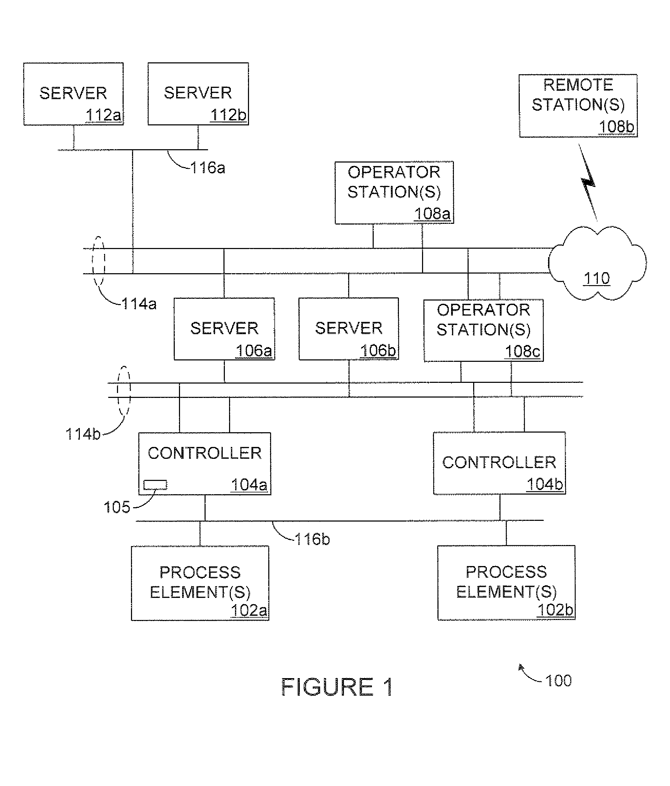

FIGURE 1 illustrates an example process control system 100 according to one embodiment of this disclosure. The embodiment of the process control system 100 shown in FIGURE 1 is for illustration only. Other embodiments of the process control system 100 may be used without departing from the scope of this disclosure.

In this example embodiment, the process control system 100 includes one or more process elements 102a-102b. The process elements 102a-102b represent components in a process or production system that may perform any of a wide variety of functions. For example, the process elements 102a-102b could represent motors, catalytic crackers, valves, and other industrial equipment in a production environment. The process elements 102a-102b could represent any other or additional components in any suitable process or production system. Each of the process elements 102a-102b includes any hardware, software, firmware, or combination thereof for performing one or more functions in a process or production system. While only two process elements 102a-102b are shown in this example, any number of process elements may be included in a particular implementation of the process control system 100.

Two controllers 104a-104b are coupled to the process elements 102a-102b. The controllers 104a-104b control the operation of the process elements 102a-102b. For example, the controllers 104a-104b could be capable of monitoring the operation of the process elements 102a-102b and providing control signals to the process elements 102a-102b. Each of the controllers 104a-104b includes any hardware, software, firmware, or combination thereof for controlling one or more of the process elements 102a-102b. The controllers 104a-104b could, for example, include processors 105 of the POWERPC processor family running the GREEN HILLS INTEGRITY operating system or processors 105 of the X86 processor family running a MICROSOFT WINDOWS operating system.

Two servers 106a-106b are coupled to the controllers 104a-104b. The servers 106a-106b perform various functions to support the operation and control of the controllers 104a-104b and the process elements 102a-102b. For example, the servers 106a-106b could log information collected or generated by the controllers 104a-104b, such as status information related to the operation of the process elements 102a-102b. The servers 106a-106b could also execute applications that control the operation of the controllers 104a-104b, thereby controlling the operation of the process elements 102a-102b. In addition, the servers 106a-106b could provide secure access to the controllers 104a-104b. Each of the servers 106a-106b includes any hardware, software, firmware, or combination thereof for providing access to or control of the controllers 104a-104b. The servers 106a-106b could, for example, represent personal computers (such as desktop computers) executing a MICROSOFT WINDOWS operating system. As another example, the servers 106a-106b could include processors of the POWERPC processor family running the GREEN HILLS INTEGRITY operating system or processors of the X86 processor family running a MICROSOFT WINDOWS operating system.

One or more operator stations 108a-108b are coupled to the servers 106a-106b, and one or more operator stations 108c are coupled to the controllers 104a-104b. The operator stations 108a-108b represent computing or communication devices providing user access to the servers 106a-106b, which could then provide user access to the controllers 104a-104b and the process elements 102a-102b. The operator stations 108c represent computing or communication devices providing user access to the controllers 104a-104b (without using resources of the servers 106a-106b). As particular examples, the operator stations 108a-108c could allow users to review the operational history of the process elements 102a-102b using information collected by the controllers 104a-104b and/or the servers 106a-106b. The operator stations 108a-108c could also allow the users to adjust the operation of the process elements 102a-102b, controllers 104a-104b, or servers 106a-106b. Each of the operator stations 108a-108c includes any hardware, software, firmware, or combination thereof for supporting user access and control of the system 100. The operator stations 108a-108c could, for example, represent personal computers having displays and processors executing a MICROSOFT WINDOWS operating system.

In this example, at least one of the operator stations 108b is remote from the servers 106a-106b. The remote station is coupled to the servers 106a-106b through a network 110. The network 110 facilitates communication between various components in the system 100. For example, the network 110 may communicate Internet Protocol (IP) packets, frame relay frames, Asynchronous Transfer Mode (ATM) cells, or other suitable information between network addresses. The network 110 may include one or more local area networks (LANs), metropolitan area networks (MANs), wide area networks (WANs), all or a portion of a global network such as the Internet, or any other communication system or systems at one or more locations.

In this example, the system 100 also includes two additional servers 112a-112b. The servers 112a-112b execute various applications to control the overall operation of the system 100. For example, the system 100 could be used in a processing or production plant or other facility, and the servers 112a-112b could execute applications used to control the plant or other facility. As particular examples, the servers 12a-112b could execute applications such as enterprise resource planning (ERP), manufacturing execution system (MES), or any other or additional plant or process control applications. Each of the servers 112a-112b includes any hardware, software, firmware, or combination thereof for controlling the overall operation of the system 100.

As shown in FIGURE 1, the system 100 includes various redundant networks 114a-114b and single networks 116a-116b that support communication between components in the system 100. Each of these networks 114a-114b, 116a-116b represents any suitable network or combination of networks facilitating communication between components in the system 100. The networks 114a-114b, 116a-116b could, for example, represent Ethernet networks. The process control system 100 could have any other suitable network topology according to particular needs.

Although FIGURE 1 illustrates one example of a process control system 100, various changes may be made to FIGURE 1. For example, a control system could include any number of process elements, controllers, servers, and operator stations.

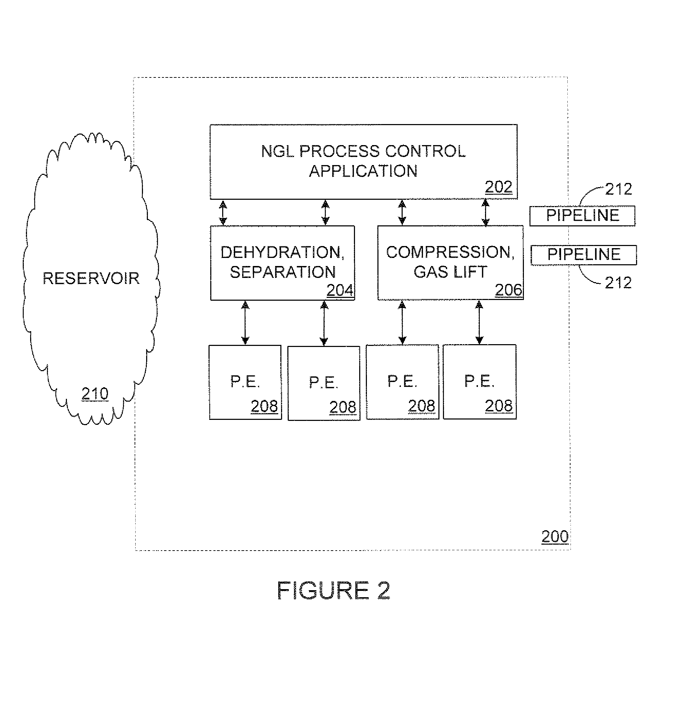

FIGURE 2 illustrates an example process control system 200 for a natural gas liquids (NGL) production processing operation according to one embodiment of this disclosure. The embodiment of the process control system 200 shown in FIGURE 2 is for illustration only. Other embodiments of the process control system 200 may be used without departing from the scope of this disclosure.

The process control system 200 of FIGURE 2 serves to produce natural gas and natural gas liquids from one or more reservoirs 210 and deliver them to pipelines 212. The chemical and mechanical processes involved are well known to those of skill in the art. In this example, the process control system 200 includes a primary NGL process control application 202 that controls the sub-processes involved in system 200. The sub-processes include those executed by dehydration and separation controllers 204 and by compression and gas lift controllers 206. These controllers 204-206 in turn control various process elements 208 as described above with regard to the generic process control system of FIGURE 1. The process control system 200 can be optimized for maximum natural gas liquids production, quality of natural gas liquids produced, and other process objectives.

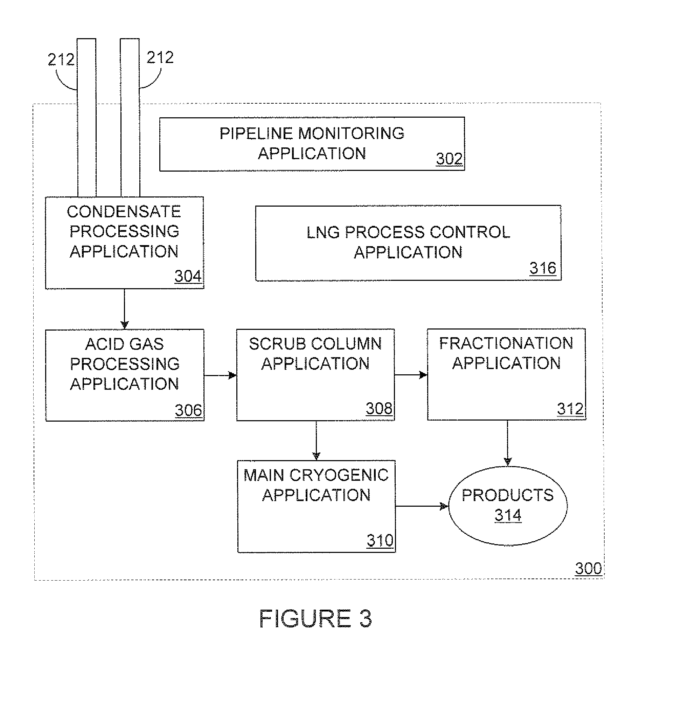

FIGURE 3 illustrates an example process control system 300 for a liquefied natural gas (LNG) production processing operation according to one embodiment of this disclosure. The embodiment of the process control system 300 shown in FIGURE 3 is for illustration only. Other embodiments of the process control system 300 may be used without departing from the scope of this disclosure.

The process control system 300 of FIGURE 3 servers to receive gas and natural gas liquids via pipelines 212 and process them into LNG products 314, such as liquefied natural gas and related products. The chemical and mechanical processes involved are well known to those of skill in the art. In this example, the process control system 300 includes a primary LNG process control application 316, which controls the sub-processes involved in the system 300. The sub-processes include those executed by a pipeline monitoring application 302, a condensate processing application 304, an acid gas processing application 306, a scrub column application 308, a main cryogenic application 310, and a fractionation application 312. Each of these applications can control multiple controllers and process elements as described above with regard to the generic process control system of FIGURE 1. Each of the illustrated applications may communicate with the primary LNG process control application 316 and may communicate with each other. The process control system 300 may be optimized for maximum liquefied natural gas production, quality of liquefied natural gas produced, and other process objectives.

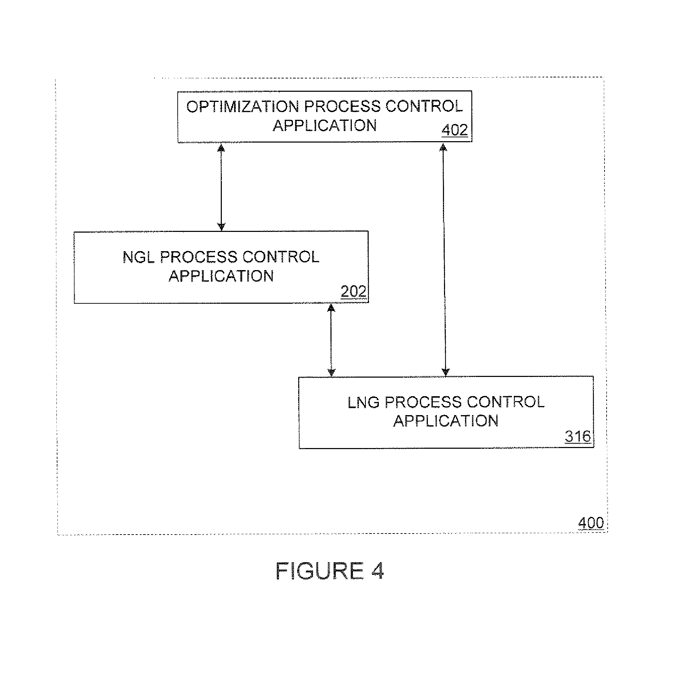

FIGURE 4 illustrates an example process control system 400 for optimization of NGL production processing and LNG production processing operations according to one embodiment of this disclosure. The embodiment of the process control system 400 shown in FIGURE 4 is for illustration only. Other embodiments of the process control system 400 may be used without departing from the scope of this disclosure.

In general, the process control system 400 implements dynamic optimization and coordination techniques so that an improved or maximum recovery of high-value NGL is achieved, while an improved or optimal feed gas quality for an LNG train is also achieved. A "holistically best" operational point may be achieved for the entire production process, not simply the best point for just one asset in the operation. Optimizing the feed quality may ensure that the amount of inert gasses, such as nitrogen, in the LNG feed gas is maximized to the quality limitation. This may give an improved or maximum return on investment since inert gases are sold at LNG rates.

In particular embodiments, the control scheme is carefully coordinated, guaranteeing the quality specifications of the LNG. Advanced control and optimization techniques may be used for both upstream and LNG processes. In particular, dynamic coordination and optimization techniques may be used to coordinate the processes in the different locations and to drive the processes to a holistic optimum. This is advantageous because it may help to ensure timely coordination between locations and to drive the processes to an optimal economic point for the entire operation, not just a local process.

As shown in FIGURE 4, the process control system 400 includes an optimization process control application 402, which communicates with and controls the NGL process control application 202 and the LNG process control application 316. In some embodiments, the NGL process control application 202 and the LNG process control application 316 can also communicate with each other. By performing high-level optimization and control over both "upstream" NGL production at the process control system 200 and "downstream" LNG processing at the process control system 300 together, overall process objectives can be optimized. This provides an advantage over conventional local-level optimization techniques that often provide overall inefficiencies. The process control system 400 can be optimized for maximum liquefied natural gas production, maximum natural gas liquids production, quality of liquefied natural gas produced, overall revenue or profit generation, and other process objectives.

In this document, the term "application" refers to one or more computer programs, sets of instructions, procedures, functions, objects, classes, instances, or related data adapted for implementation in a suitable computer language. An application may be configured to run and control a particular section of an operating process. An application could also be configured to maximize profit, quality, production, or other objectives. As a particular example, each application could be configured with or operate using manipulated variables (MV), controlled variables (CV), disturbance variables (DV), and a control horizon over which the application operates to ensure that the variables are brought inside limits specified by an operator. A controlled variable represents a variable that a controller attempts to maintain within a specified operating range or otherwise control. A manipulated variable represents a variable manipulated by the controller to control a controlled variable. A disturbance variable represents a variable that affects a controlled variable but that cannot be controlled by the controller.

In particular embodiments, to ensure that the application 402 utilizes any degrees of freedom to increase profitability or other defined objectives, the application 402 may be configured with either linear program (LP) economics or quadratic program (QP) economics. These two different economic optimization approaches use a minimization strategy described below, and the quadratic optimization also uses ideal resting values (or desired steady state values). The general form of an objective function is :

$$\text{Minimize} \quad J = \sum_i b_i \times CV_i + \sum_i a_i^2 (CV_i - CV_{0i})^2 + \sum_j b_j \times MV_j + \sum_j a_{j2} (MV_j - MV_{0j})^2 \, ,$$

where:

$b_i$ represents the linear coefficient of the $i^{th}$ controlled variable;
$b_j$ represents the linear coefficient of the $j^{th}$ manipulated variable;
$a_i$ represents the quadratic coefficient of the $i^{th}$ controlled variable;
$a_j$ represents the quadratic coefficient of the $j^{th}$ manipulated variable;
$CV_i$ represents the actual resting value of the $i^{th}$ controlled variable; and
$CV_{0i}$ represents the desired resting value of the $i^{th}$ controlled variable;
$MV_j$ represents the actual resting value of the $j^{th}$ manipulated variable; and
$MV_{0j}$ represents the desired resting value of the $j^{th}$ manipulated variable.

As shown here, the optimization for each application can be complex since the scope of an application may contain upwards of twenty variables, each able to be incorporated into either a linear or quadratic optimization objective. Given that the production process may be sequential and that altering the limits on a product quality or rate on one application may affect another application, there is coordination between the various applications.

The following represents examples of how the various applications in the various process control systems may operate alone or in combination. These examples are for illustration and explanation only. The various applications could perform any other or additional operations according to particular needs.

The pipeline-monitoring application 302 monitors the materials in the pipelines 212, such as by measuring differential pressures across the pipelines 212. The application 302 also detects operational issues, such as the location of pigs, whether there are leaks, and where any leaks are located. The application 302 aids process decisions in the course of normal operations.

The rate of throughput in the downstream LNG processing is controlled by the LNG process control application 316. It is also affected by process capacity and factors (such as ambient temperature) that affect the potential capacity of the process. The rate of consumption of materials from the pipelines 212 affects the pressure in the pipelines 212 at the entry point to the process control system 300. This pressure also affects the quality of the non-LNG streams, such as the NGL or condensate.

The process control system 300 and any other systems that have a process unit fed from the pipelines 212 therefore can affect pressure at the supply point (the exit point of process control system 200). As a result, the process control system 200 controls the pressure at the supply point, which may involve increasing the rate to increase the pressure and vice versa. For example, to increase the rate, the process control system 200 could open choke valves on different wells fed from the reservoir 210. The one or more reservoirs 210 are typically accessed through different wells, and each of these wells often produces material that is of a different composition. The aggregate composition of the material entering the pipelines 212 is affected by the amount of material that is produced from each of the wells. When any of the wells produces inert gasses, the amount of inert gasses reaching the supply point is dictated by the relative amount of material from the inert gas producing wells compared to the remainder of the wells. The process control system 200 may adjust the choke valves based on the well that produces the highest quantity of NGL together with the gas, the well having the highest condensate to gas ratio (CGR), or according to other objectives. Once a well is fully open, the process control system 200 may move onto the next highest well and repeat the process until the required amount of gas is provided to increase the pressure at the supply point on the pipelines 212.

The process control system 200 also controls local process issues, such as the performance of the gas and liquid dehydration processes, choke valve positioning, production of sand volumes, and pressure balancing. As such, the process control system 200 may not monitor the compositional effect of its operations on the supply material to the LNG process controlled by the process control system 300. When there is more than one platform supplying material to the LNG process controlled by the process control system 300, overall feed composition control cannot be achieved unless the process control system 200 and the process control system 300 are in constant communication. With multiple independent processes, it is difficult to even maintain the supply point pressure at the correct level or to maintain the correct pressure and the correct composition of feed to ensure the optimal product composition.

The process control system 400 is therefore used to facilitate cooperation between the process control system 200 and the process control system 300. The optimization process control application 402 may automatically resolve and coordinate these local process issues, without requiring a high degree of operator interaction. The optimization process control application 402 may, for example, meet the requirements of maximized condensate recovery while also achieving suitable pressure on the inlet of the pipelines 212. As a particular example, the process control system 400, with the optimization process control application 402, may optimize the processes across multiple units, devices, or systems, such as the upstream processes as controlled by the process control system 200, the pipelines 212, and the LNG processes controlled by the process control system 300.

The operations of the process control systems 200-400 could be performed by any suitable hardware, software, firmware, or combination thereof. For example, each process control system could include one or more physical data processing systems. Also, some or all of the various operations and applications can be performed or executed on multiple systems or on a single system (as long as the one or more systems are connected to control the relevant controllers and process elements, wherever located).

The process control system 400 may provide true multi-unit optimization. It combines the control and optimization problems from different systems and then optimizes them together. This allows the process control system 400 to determine not only the holistically optimal operating point, but also the optimal path to that point. Because the process control system 400 coordinates the lower level multivariable controllers, the overall time to steady state can be hours or days.

In particular embodiments, the process control system 400 uses bridge models to link variables between applications with dynamic models. A lag in variables (such as the lag between attempting to increase pressure in the pipelines 212 and the actual increase in pressure) can be modeled with either a long lag or deadtime. The process control system 400 links the upstream and downstream applications such that variables like the supply pressure can be linked to the pipeline entry pressure and variables such as the ambient temperature can be transmitted back to the upstream applications. In this manner, the process control system 400 coordinates the applications across multiple upstream sites and includes the yield of material such as condensate or NGL into the holistic optimum and the yield from each site being controlled.

Wells for each reservoir 210 could also be compositionally linked into the process control system 400 such that their effect on downstream products is part of the overall coordination. In this way, the process control system 400 can also evaluate the exact mathematical relationship between a change in a choke valve's position on the upstream application and the exact effect on the LNG or fractionation train products. Thus, the condensate yield can be dynamically maximized to the constraint of the quality of the products, even though the time lag between the change in the choke valve position and the effect manifesting itself in the process may be long (such as in excess of eight to twelve hours).

Utilizing the dynamic transmission and coordination of constraints across the entire operation (from the wellhead in the upstream production area through to the product tanks in the LNG production site), the process control system 400 may enable higher production of valuable products such as NGL. Because the process control systems and applications may be layered, this implementation lends itself to the integration with models supporting other areas of the process. For example, reservoir models and online constraints such as reservoir velocities can be included into the control scheme to ensure that all constraints are considered within an optimization.

Although FIGURES 2 through 4 illustrate three process control systems, various changes may be made to FIGURES 2 through 4. For example, the functional divisions in FIGURES 2 through 4 are for illustration only. Various elements in FIGURES 2 through 4 could be combined or omitted and additional components could be added according to particular needs.

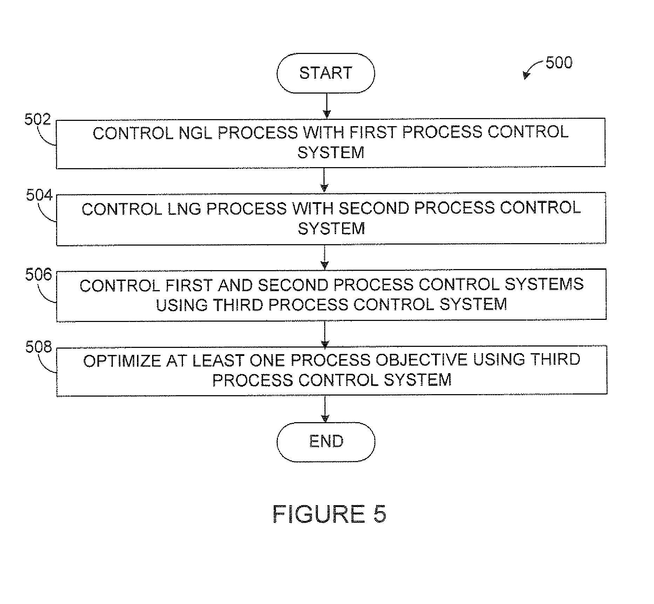

FIGURE 5 illustrates an example method 500 for coordination and optimization of LNG processes according to one embodiment of this disclosure. For ease of explanation, the method 500 is described with respect to the process control systems 200-400 described above with respect to FIGURES 2 through 4. The method 500 could be used by any suitable device and in any suitable system.

A first process control system controls the operations of an NGL production process from a reservoir at step 502. This may include, for example, the process control system 200 controlling the NGL production process.

A second process control system controls the operations of an LNG production process at step 504. This may include, for example, the process control system 300 controlling the LNG production process.

A third process control system controls the operations of the first and second process control systems at step 506. This may include, for example, the optimization process control application 402 in the process control system 400 coordinating and controlling the operations of the process control systems 200-300.

The third process control system optimizes operations of the first and second process control systems to optimize at least one process objective at step 508. This may include, for example, the optimization process control application 402 in the process control system 400 optimizing the operations of the process control systems 200-300. The process objective could include profit, product quality, product production quantity, or any other process objective or objectives.

Although FIGURE 5 illustrates one example of a method 500 for coordination and optimization of LNG processes, various changes may be made to FIGURE 5. For example, one, some, or all of the steps may occur as many times as needed. Also, while shown as a sequence of steps, various steps in FIGURE 5 could occur in parallel or in a different order. As a particular example, all steps shown in FIGURE 5 could be performed in parallel.

In some embodiments, the various functions performed in conjunction with the process management systems described above are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory.

It may be advantageous to set forth definitions of certain words and phrases used throughout this patent document. The term "couple" and its derivatives refer to any direct or indirect communication between two or more elements, whether or not those elements are in physical contact with one another. The terms "include" and "comprise," as well as derivatives thereof, mean inclusion without limitation. The term "or" is inclusive, meaning and/or. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. The term "controller" means any device, system, or part thereof that controls at least one operation. A controller may be implemented in hardware, firmware, software, or some combination of at least two of the same. The functionality associated with any particular controller may be centralized or distributed, whether locally or remotely.

While this disclosure has described certain embodiments and generally associated methods, alterations and permutations of these embodiments and methods will be apparent to those skilled in the art. For example, the teachings of this disclosure are not limited to use with NGL and LNG production systems but can be applied to any system where holistic process control of one or more typically-independent processes would be advantageous. Accordingly, the above description of example embodiments does not define or constrain this disclosure. Other changes, substitutions, and alterations are also possible without departing from the spirit and scope of this disclosure, as defined by the following claims.

**Claims**

1.  A method, comprising:

    controlling a first process using a first process control system;
    controlling a second process using a second process control system;
    controlling the first and second process control systems together; and
    optimizing at least one process objective using both the first and second process control systems.

2.  The method of Claim 1, wherein:

    the first process comprises a natural gas liquids production process; and
    the second process comprises a liquefied natural gas production process.

3.  The method of Claim 2, further comprising controlling a pipeline delivering natural gas liquids between the first process and the second process.

4.  The method of Claim 2, wherein the process objective is a quality of liquefied natural gas produced by the second process.

5. The method of Claim 2, wherein the process objective is a quantity of liquefied natural gas produced by the second process.

6. The method of Claim 2, wherein the process objective is a quantity of natural gas liquids produced by the first process.

7. An apparatus, comprising:

  at least one processor capable of:

    simultaneously controlling a first process control system that controls a first process and a second process control system that controls a second process; and
    optimizing at least one process objective using both the first and second process control systems.

8. The apparatus of Claim 7, wherein:

  the first process comprises a natural gas liquids production process; and
  the second process comprises a liquefied natural gas production process.

9. A computer program embodied on a computer readable medium and operable to be executed by a processor, the computer program comprising computer readable program code for:

  simultaneously controlling a first process control system that controls a first process and a second process control system that controls a second process; and
  optimizing at least one process objective using both the first and second process control systems, wherein the first process comprises a natural gas liquids production process and the second process comprises a liquefied natural gas production process.

10. The computer program of Claim 9, wherein the process objective comprises at least one of: profit, natural gas liquids quantity, natural gas liquids quality, liquefied natural gas quantity, and liquefied natural gas quality.

FIGURE 1

| NGL PROCESS CONTROL APPLICATION | 202 |

RESERVOIR 210

| DEHYDRATION, SEPARATION | 204 |
| COMPRESSION, GAS LIFT | 206 |

PIPELINE 212
PIPELINE 212

| P.E. 208 | P.E. 208 | P.E. 208 | P.E. 208 |

200

FIGURE 2

212     212

```
PIPELINE MONITORING
    APPLICATION
                    302
```

```
CONDENSATE
PROCESSING
APPLICATION
            304
```

```
LNG PROCESS CONTROL
     APPLICATION
                    316
```

```
ACID GAS
PROCESSING
APPLICATION
            306
```
→
```
SCRUB COLUMN
 APPLICATION

            308
```
→
```
FRACTIONATION
 APPLICATION

            312
```

```
MAIN CRYOGENIC
 APPLICATION


            310
```
→
```
PRODUCTS
  314
```

300

# FIGURE 3

OPTIMIZATION PROCESS CONTROL
APPLICATION                402

NGL PROCESS CONTROL
APPLICATION
                    202

LNG PROCESS CONTROL
APPLICATION
                    316

400

FIGURE 4

START

500

502    CONTROL NGL PROCESS WITH FIRST PROCESS CONTROL
SYSTEM

504    CONTROL LNG PROCESS WITH SECOND PROCESS CONTROL
SYSTEM

506    CONTROL FIRST AND SECOND PROCESS CONTROL SYSTEMS
USING THIRD PROCESS CONTROL SYSTEM

508    OPTIMIZE AT LEAST ONE PROCESS OBJECTIVE USING THIRD
PROCESS CONTROL SYSTEM

END

## FIGURE 5

**European Patent Office**

**EUROPEAN SEARCH REPORT**

Application Number

EP 07 10 7240

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 434 435 B1 (TUBEL PAULO S [US] ET AL) 13 August 2002 (2002-08-13) * column 6, line 48 - column 16, line 59 * * figures 1-8 * ----- | 1-10 | INV. G06Q10/00 |
| X | SAPUTELLI L A ET AL: "Promoting Real-Time Optimization of Hydrocarbon Producing Systems" SPE ANNUAL TECHNICAL CONFERENCE AND EXHIBITION, XX, XX, vol. SPE 83978, 2 September 2003 (2003-09-02), pages 1-9, XP002393965 * the whole document * ----- | 1-10 | |
| A | US 4 685 522 A (DIXON GLENN A [US] ET AL) 11 August 1987 (1987-08-11) * column 3, line 53 - column 4, line 49 * * column 11, line 36 - column 17, line 64 * * figures 1-4 * ----- | 1-10 | TECHNICAL FIELDS SEARCHED (IPC) G06Q G05B |

The present search report has been drawn up for all claims

| Place of search | Date of completion of the search | Examiner |
|---|---|---|
| The Hague | 20 August 2007 | Rachkov, Vassil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 07 10 7240

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2007

| Patent document cited in search report | | Publication date | Patent family member(s) | Publication date |
|---|---|---|---|---|
| US 6434435 | B1 | 13-08-2002 | NONE | |
| US 4685522 | A | 11-08-1987 | NONE | |

EPO FORM P0459

For more details about this annex : see Official Journal of the European Patent Office, No. 12/82